# EUROPEAN PATENT SPECIFICATION

(11) **EP 3 067 236 B1**
(45) Date of publication and mention of the grant of the patent: **21.02.2018**
(21) Application number: 14199310.5
(22) Date of filing: 19.12.2014
(51) Int. Cl.: B60R 1/00, H02J 7/02

(54) **IMAGE CAPTURE ASSEMBLY AND IMAGE CAPTURE SYSTEM INCLUDING AN IMAGE CAPTURE ASSEMBLY**
BILDERFASSUNG UND BILDAUFNAHMESYSTEM MIT EINER BILDERFASSUNGSANORDNUNG
ENSEMBLE DE CAPTURE D'IMAGE ET SYSTÈME DE CAPTURE D'IMAGE COMPRENANT UN ENSEMBLE DE CAPTURE D'IMAGE

(43) Date of publication of application: 14.09.2016
(73) Proprietor: Application Solutions (Electronics and Vision) Limited, Lewes, East Sussex BN7 2 AQ (GB)
(72) Inventor: Wibberley, Dave, Brighton, BN1 6RG (GB)
(74) Representative: Büchner, Jörg

(56) References cited:
- EP-A1- 2 478 855
- JP-A- 2013 132 139
- KR-A- 20140 115 790
- US-A1- 2006 184 705
- US-A1- 2011 122 260

## Description

The present invention relates to an image capture assembly, an image capture system including an image capture assembly and use of the image capture assembly in a vehicle and in a building.

An image capture device, such as a camera, may be used to capture images of the environment around an object, for example the environment around a building, a property, a plot of land or a vehicle. The image capture device may be mounted on the outside of the object or may be positioned inside the object, for example facing a window, in order to capture images of the environment outside of the object.

The image captured by the image capture device may be used in various ways. For example, an image capture device may be used as part of a surveillance system for a building or property or as part of a driver assistance system for a vehicle.

An image capture device mounted on a vehicle may be used to detect hazards or possible hazards from the captured image or images and then provide the driver with a warning. Alternatively or in addition, detection of a hazard or possible hazard may be used in connection with driver assistance systems to actively take control of the vehicle and avoid the hazard.

US 2006/0098094 A1 discloses a portable camera system for a vehicle that includes a movable weather resistant camera housing unit that wirelessly transmits images to a portable display unit. This camera system may be easily attached to the rear of the vehicle and may be moved from one vehicle to another or removed from the vehicle for safekeeping and storage.

US 2011/122260 A1 discloses an image capture assembly according to the preamble of claim 1 comprising a camera module allowing for its downsizing and reducing power consumption transmits and receives data to and from another apparatus via wireless communication, and includes: a camera unit capturing object images and providing information of the images as image data; a memory in which the data is stored; an antenna unit used for wireless transmission and reception; a wireless IC unit wirelessly transmitting the data; a power supply unit receiving electromagnetic waves used for wireless communication via the antenna unit and generating power by electromagnetic induction through the electromagnetic waves or by a radiated electromagnetic field; a power supply unit supplying the power at least to the camera unit; and a memory power control unit selecting one of the power supply units as a power source of the memory according to a state of the camera module.

However, further improvements to camera systems which are easily attachable to objects are desirable.

An object of the invention is, therefore, to provide a camera system which is easily attachable to an object.

This object is solved by the subject matter of the independent claims. Further improvements are the subject matter of the dependent claims.

According to the invention an image capture assembly comprises a first module and a second module. The first module comprises an image capture device, a first transmitter for transmitting signals from the image capture device to the second module and a first receiver for wirelessly receiving power from the second module. The second module comprises a second transmitter for transmitting power wirelessly to the first receiver of the first module and a second receiver for receiving signals from the image capture device.

The two modules of the image capture assembly are wirelessly coupled both for the transmission of images captured by the image capture device of the first module to the second module and for the transmission of power from the second module to the first module. This enables the first module to be provided without a local source of power, such as a battery, for the image capture device. This simplifies maintenance of the image capture assembly since the battery does not have to be exchanged when exhausted or to be recharged. Furthermore, depending on the installation site of the image capture assembly, exchange or recharging of the local power source may be inconvenient and/or difficult to carry out. For example, the image capture assembly may be mounted in a position in which access to the image capture assembly may be inconvenient, for example towards the top of a building, or a large vehicle, such as a double-decker bus or heavy goods vehicle.

Since there are no wire connections between the first module and the second module of the image capture assembly, the first module can be mounted on the outside of an object, such as a building, property or vehicle and the second module positioned on the inside of the object without requiring that holes are drilled through a wall of a building or a panel of a vehicle, for example, to physically couple the first module with the second module and enable power to be provided to the first module by a cable. The image capture assembly may be useful for use in situations in which through-holes for cables and wires cannot be easily formed, for example in a glass window.

According to the invention, the first module is configured to be mounted on a first side of a panel and the second module is configured to be mounted on a second side of the panel, the second side opposing the first side.

The first side of the panel may be an exterior surface and the second side of the panel may be an interior surface, for example, of a building or a vehicle.

According to the invention, the panel is transparent such as a window pane. As used herein, transparent means optically transparent in a wavelength range visible to the human eye.

The first module may include a flange which is configured to be mounted on a first side of the panel without the use of fixings which penetrate the panel. For example, the first module may include a flange which is configured to be mounted on the first side of the panel by adhesive positioned between the flange and the first side of the panel.

Alternatively, the first module may be configured to be mounted on the first side of the panel by magnetic attractive force or by suction, for example a suction cup.

Similarly, the second module may be configured to be mounted on the second side of the panel without the use of fixings which penetrate the panel. For example, the second module may also include a flange which may be mounted by adhesive, magnetic attractive force or a suction cup to the second side of the panel. The first module and the second module may be mounted on the panel using the same or different non-penetrating mounting arrangements. The second module may be mounted on a further structure, such as an inner panel, which faces the panel on which the first module is mounted. In these embodiments, the second module may not be directly mounted on the same panel as the first module.

In some embodiments, the second transmitter, which is primarily used to transmit power to the first module, is further configured to transmit signals to the image capture device. The signals may be used to configure and/or to dynamically control the image capture device. The second transmitter may be used to provide a control back channel by modulation of the power signal or transit signals on top of the power signal. This embodiment may be used for low bandwidth unidirectional control signalling, for example.

In some embodiments, the second receiver of the second module is configured as a transceiver or the second module includes a further transmitter. The transceiver or further transmitter may be used to transmit signals to the image capture device. In this embodiment, a bidirectional channel is provided which supports both the reception of data from the image capture device, for example video output from the image capture device, and bidirectional control/status signalling.

Signals transmitted from the image capture device via the first transmitter of the first module to the second receiver of the second module and, in embodiments in which the second receiver is a transceiver, signals transmitted from the transceiver to the image capture device, are transmitted optically.

Power is transmitted from the second transmitter of the first module to the first receiver of the first module wirelessly, that is by a non-contact method, and may be transmitted electromagnetically inductively. The second transmitter may include a power feed resonant circuit having a power feed coil and a power feed capacitor and the first receiver of the first module may include a power receiver coil and a power receive capacitor. The power feed coil and the power receiver coil constitute a power feed transformer. Power transmission is carried out by a non-contact method using an electromagnetic induction effect between the coils.

An image capture system is also provided that comprises at least one image capture assembly according to one of the embodiments described herein. The image capture system further comprises an image processing unit and an image display unit. The image processing unit may be electrically coupled to the second module by one or more physical connections, for example wires or cables. The image processing unit receives the signals from at least one image capture assembly and processes these signals to provide the image captured by the image capture system to the image display unit for display. The image processing unit may also process the signals received from the image capture device by correcting for contrast and brightness, for example.

In some embodiments, the image capture system includes one or more further image capture devices, in addition to the least one image capture assembly according to one of the embodiments described herein. The further image capture devices may be an image capture assembly according to one of embodiments described herein or may have an alternative configuration. For example, for a system used with a vehicle, the image capture device may be positioned on the inside of the vehicle and face a window or on the outside of the vehicle and be coupled to the image processing unit by a cable which passes though the vehicle shell.

The image capture devices and image capture assembly may be arranged to provide a surround view, i.e. a 360° view, of the immediate vicinity. In the case of a vehicle, a surround view of the immediate vicinity of the vehicle is provided. The surround view may be provided by a composite image and may be a top view or bird's eye image or a panoramic view.

The image capture device may be an analogue or a digital camera and may be a video camera capturing images at a number of frames per second, for example 35 frames a second.

The image capture device may include a lens having an angle of view or field of view that is suitable for a particular application. For example the lens may be a standard lens with an angle or vie of around 62° to 40°, a narrow angle lens or a wide field of view lens. A wide field of view lens may be used in order that the camera can capture an image from a wider area, for example around a vehicle, to provide a surround view with a fewer number of image capture devices.

In some embodiments, the lens is a fisheye lens and may be either a 180° fisheye lens, in which the diagonal of the image captures 180°, or may be a circular fisheye lens in which the lens captures a 180° image vertically, horizontally and diagonally. In an embodiment, the fisheye lens captures a 190° image horizontally and 190° diagonally and less than 190° vertically.

Wide field of view lenses and fisheye lenses may be used for vehicles in which it is desirable to produce a top or a bird's eye view or a panoramic view of the entire environment around the vehicle. In these embodiments, four image capture devices may be provided which are positioned at the front, rear, left and right of the vehicle.

The image processing means may be provided as one or more further algorithms or computer programs in an image processing device coupled to the cameras. For example, the image processing device may enable mapping of an image from a fisheye lens of the image capture device to a single plane. The image processing device may include further algorithms or programs for combining images captured from two or more cameras to form a composite image, such as a bird's eye view of panoramic view for example. The image processing unit may also include one or more algorithms or programs for compensating image distortions introduced by the wireless transmission.

An object is provided that comprises the image capture assembly or image capture system according to one of the embodiments described above. The object may be a building or a vehicle, for example.

The first module of the image capture assembly may be mounted on an exterior surface of the object and the second module may be mounted on an interior surface of the object. In an embodiment, the first module is mounted on an exterior surface of a panel of the object and the second module is mounted on an interior surface of the panel of the object and, according to the invention, the panel is optically transparent.

The panel may be a window.

The image capture assembly according to one of the embodiments described above may be used in a surround view system on a vehicle or in a surveillance system for a building, property or plot of land.

In embodiments in which the object is a vehicle comprising the image capture system, the vehicle may further comprise one or more image capture assemblies according to one of the embodiments described herein and one or more further image capture devices which may or may not be according to one of the embodiments described herein. The image capture assembly and the at least one further image capture device may be configured to provide a surround view of the immediate vicinity of the vehicle.

The first module may be mounted on the outside of vehicle and the second module may be mounted on the inside of the vehicle, for example. The panel is an optically transparent panel such as a glass or polymer window.

The image capture devices and image capture assemblies may be arranged on the vehicle so as to provide a 360° surround view of the immediate vicinity of the vehicle. For example, an image capture assembly may be arranged at the rear of the vehicle and a further image capture assembly or image capture device may be mounted on the right side, on the left side and front of the vehicle.

In embodiments in which the image capture system includes two or more image capture devices, the image processing unit may be configured to process the images from the various image capture devices to form a composite image. The image processing device may also identify one or more objects in a region of the images covered by both image capture devices, i.e. in an overlapping region which is captured by both of the image capture devices. If the difference in the position of the object is determined, the image processing unit may process the image to compensate for differences in the position of the object and may provide a calibration facility for image capture devices and image capture assemblies.

The display may be positioned within a vehicle, for example, so that the vehicle driver is able to view the images in the driving position. The captured images may be used to check clearances around the vehicle or to enable the driver to detect objects in the vicinity of the vehicle which he cannot see directly from the driving position.

The image capture assembly enables the image capture device of the first module to be sited in the best possible position on objects with large areas of glass since a physical connection between the first module mounted on the vehicle exterior and the second module mounted on the vehicle interior is not required. Installation and, in particular, retrofitting of the an image capture device as part of the image capture assembly is simplified and costs may be reduced, in particular, as the difficulty and cost involved with boring the through-hole through the glass pane is avoided. As the shell of the object is not penetrated, the risk of water ingress is removed and thus eliminates the requirement to defend against water ingress. For example by providing seals between the cables and the hole in the shell.

Embodiments will now be described with reference to the accompanying drawings.
- Figure 1: illustrates an image capture assembly
- Figure 2: illustrates a vehicle with the image capture assembly.

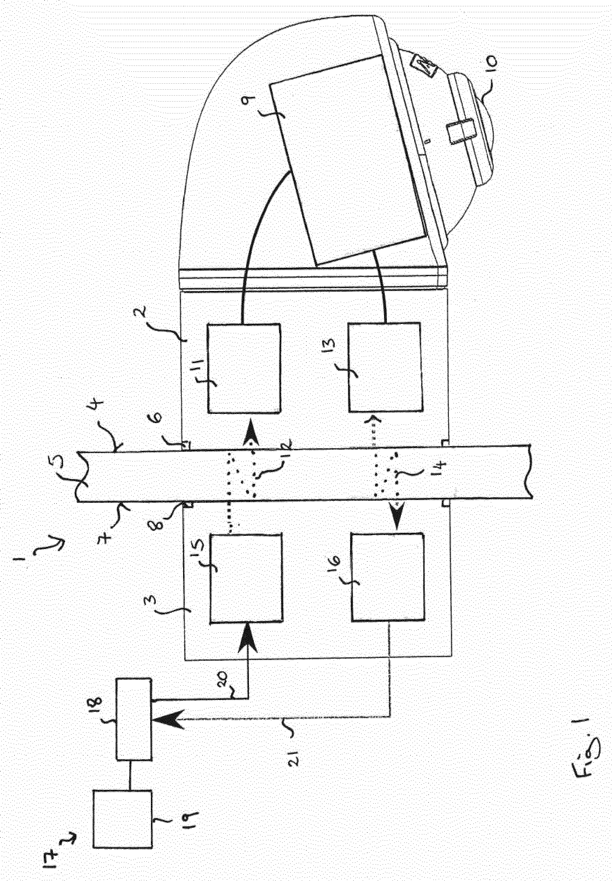

Figure 1 illustrates that an image capture assembly 1 including a first module 2 and a second module 3. The image capture assembly 1 is illustrated in a mounted or assembled condition, in which the first module 2 is mounted on a first side, for example, an outer surface 4 of a panel 5 of an object by a layer of adhesive 6 and the second module 3 is mounted on a second side, for example, the interior surface 7 of the panel 5 by a layer of adhesive 8. The first module 2 and second module 3 are illustrated in alignment and mounted on opposing sides of the panel 5. However, other arrangements are also possible. The panel 5 may be a panel of a building or a vehicle and is optically transparent. For example the panel 5 may be a glass window.

The first module 2 includes an image capture device 9, a lens 10, which may be a wide area wide field of view lens or a fisheye lens, a first receiver 11 for wirelessly receiving power from the second module 3 as is indicated schematically with the arrow 12 and a first transmitter 13 for transmitting signals from the image capture device 9 to the second module 3 wirelessly as is indicated schematically by the arrow 14.

The second module 3 includes a second transmitter 15 for wirelessly transmitting power to the first receiver 11 of the first module 2 and a second receiver 16 for receiving signals from the image capture device 9.

There are no physical connections such as wire or cables which couple the first module 2 to the second module 3 as the power is transmitted wireless to the first module 2 from the second module 3 and the captured images are transmitted wirelessly from the first module 2 to the second module 3. Consequently, the image capture assembly 1 may be mounted on the panel 5 without the need for holes which penetrate the panel 5. The image capture assembly 1 is, therefore, easily mountable on the panel 5.

The second module 3 is coupled to further components of an image capture system 17 including image processing means 18 and a display 19 by wired connections 20, 21. The image processing means 18 and the display 19 are arranged on the same side of the panel 5 as the second module 3.

In some embodiments, the first transmitter 13 of the first module 2 and the second receiver 16 of the second module 3 may be configured as transceivers in order to provide a bidirectional communication between the second module 3 and the first module 2. This bidirectional communication may be used to send control signals from the transceiver 16 of the second module 3 to the transceiver 13 of the first module 2 which may be used to control or calibrate the image capture device 9.

The image capture device 9 may be a video camera which captures a number of images or frames per second, for example 35 frames per second. The image capture device 9 may be an analogue or digital device.

In the embodiment illustrated in Figure 1, the lens 10 faces downwardly. In other embodiments, the lens may face substantially horizontally or even upwardly depending on the position of mounting of the image capture assembly on the object and the area in the vicinity of the lens which it is desired to capture.

The image capture assembly 1 may be used singly or in combination with further image capture assemblies or further image capture devices in various applications. For example, the image capture assembly 1 may be used for a surveillance system for a building, whereby the first module 2 may be mounted on the exterior of the building, for example on the outer surface of a window and the second module 3 may be mounted on the interior of the building, for example on the inner surface of the window. The image capture assembly 1 may be mounted without requiring holes to be drilled through the wall of the building to physically connect the first module 2 to the second module 3 or to allow power to be supplied to the image capture device 9 or to receive images from the image capture device 9. Therefore, the image capture assembly 1 is useful for domestic surveillance systems since it is easy to install.

In one embodiment, the image capture assembly 1 may be used in a vehicle 30 as part of a system for providing a surround view for a vehicle 30.

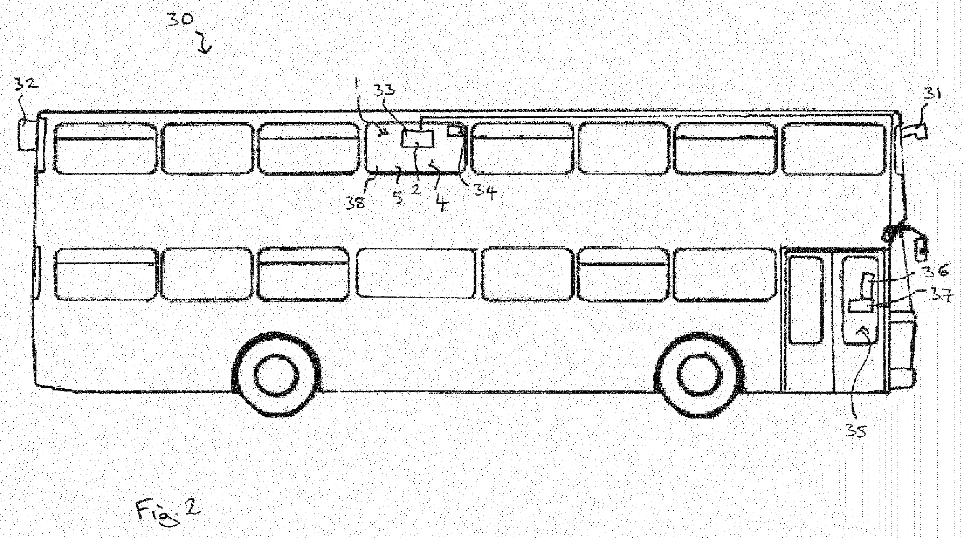

Figure 2 illustrates a vehicle 30 and four image capture devices 31, 32, 33, 34. The image capture devices 31, 32, 33, 34 form part of a system 35 including a display 36 and image processing means 37. The first image capture device 31 is mounted at the front of the vehicle to capture an image to the front of the vehicle 30, the second image capture device 32 is mounted at the rear of the vehicle 30, the third image capture device 33 is mounted on the right and the fourth image capture device 34 is mounted on the left of the vehicle 30.

The third image capture device 33 mounted on the right of the vehicle 30 is mounted on one of the windows 38 of the upper deck. The third image capture device 33 is provided by the image capture assembly 1 illustrated in Figure 1 and the window 38 provides the panel 5. The first module 2 is mounted on the exterior surface 4 of the window 38 and the second module 3 is mounted on the interior surface of the window 38 of the vehicle 30. Since the power is transmitted wirelessly to the first module 2 from the second module 3 and the captured images are transmitted wirelessly from the first module 2 to the second module 3, the image capture assembly 1 may be mounted on the window 38 without requiring holes which penetrate the window 38.

The image capture devices 31, 32, 33, 34 may each have a wide field of view lens enabling a complete seamless 360° image or surround view from around the vehicle 30 to be captured when the images are combined to form a composite image by the image processing means 37. The composite image is displayed on the display 36. The image processing means 37 may compensate for distortions and/or may enable calibration of the image capture devices 31, 32, 33, 34 and/or may enable the images captured from two or more of the image capture devices 31, 32, 33, 34 to be combined to form a composite image or surround view, such as a bird's eye view or a panoramic view of the environment around the vehicle 30.

The vehicle 30 is illustrated in Figure 2 as a double decker bus. However, the vehicle may also be an automobile, a different type of heavy goods vehicle such as a truck or may be an industrial vehicle, for example a tractor, etc. The vehicle may also be a ship, submarine, aeroplane or a helicopter.

## Claims

1. An image capture assembly (1), comprising:
a first module (2) and a second module (3), wherein the first module (2) comprises an image capture device (9), a first transmitter (13) for transmitting signals from the image capture device (9) and a first receiver (11) for receiving power wirelessly from the second module (3), and
the second module (3) comprises a second transmitter (15) for transmitting power wirelessly to the first receiver (11) of the first module (2) and a second receiver (16) for receiving signals from the image capture device (9), **characterized in that**
the first module (2) is configured to be mounted on a first side (4) of a panel (5) and the second module (3) is configured to be mounted on a second side (7) of the panel (5), the second side (7) opposing the first side (4), wherein
the panel (5) is optically transparent, such that the signals are transmitted optically between the first module (2) and the second module (3).

2. The image capture assembly (1) according to claim 1,
**characterised in that**
the second transmitter (15) of the second module (3) is further configured to transmit signals to the image capture device (9).

3. The image capture assembly (1) according to one of claims 1 to 2,
**characterised in that**
the second receiver (16) of the second module (3) is configured as a transceiver and is further configured to transmit signals to the image capture device (9).

4. The image capture assembly (1) according to one of claims 1 to 3,
**characterised in that**
the power is transmitted inductively from the second module (3) to the first module (2).

5. The image capture assembly (1) according to one of claims 1 to 4,
**characterised in that**
the image capture device (9) comprises a video camera.

6. The image capture assembly (1) according to one of claims 1 to 5,
**characterised in that**
the image capture device (9) comprises a lens (10), wherein the lens is a narrow field of view lens, a wide field of view lens or a fisheye lens.

7. An image capture system (17; 35), comprising at least one image capture assembly (1) according to one or claims 1to 6 and further comprising an image processing unit (18; 37) and an image display (19; 36).

8. The image capture system (17; 35) according to claim 7,
**characterised in that**
the second module (3) is coupled to the image processing unit (18; 37) and/or image display (19; 36) by at least one cable (20, 21) .

9. An object (30) comprising the image capture system (17; 35) according to claim 7 or claim 8,
**characterised in that**
the first module (2) is mounted on an exterior surface (4) of a panel (5) of the object (30) and the second module (3) is mounted on an interior surface (7) of the panel (5) of the object (30) and the panel (5) is optically transparent.

10. The object (30) according to claim 9,
**characterised in that**
the first module (2) is mounted on an exterior surface (4) of the object (30) and the second module (3) is mounted on an interior surface (7) of the object (30).

11. A vehicle (30) comprising the image capture system (17; 35) according to claim 7 or claim 8, and further comprising at least one further image capture device (31, 32, 34), the image capture assembly (1) and the at least one further image capture device (31, 32, 34) being configured to provide a surround view of the immediate vicinity.

12. Use of the image capture assembly (1) according to one of claims 1 to 6 in a surround view system on a vehicle or in a surveillance system for a building, property or plot of land.

## Patentansprüche

1. Bilderfassungsanordnung (1), umfassend:
ein erstes Modul (2) und ein zweites Modul (3), wobei
das erste Modul (2) eine Bilderfassungsvorrichtung (9), einen ersten Sender (13) zum Übertragen von Signalen von der Bilderfassungsvorrichtung (9) und einen ersten Empfänger (11) zum kabellosen Empfangen von Leistung von dem zweiten Modul (3) umfasst und
das zweite Modul (3) einen zweiten Sender (15) zum kabellosen Übertragen von Leistung an den ersten Empfänger (11) des ersten Moduls (2) und einen zweiten Empfänger (16) zum Empfangen von Signalen von der Bilderfassungsvorrichtung (9) umfasst,
**dadurch gekennzeichnet, dass**
das erste Modul (2) ausgeführt ist zur Montage auf einer ersten Seite (4) einer Platte (5) und das zweite Modul (3) ausgeführt ist zur Montage auf einer zweiten Seite (7) der Platte (5), wobei die zweite Seite (7) der ersten Seite (4) gegenüber liegt, wobei
die Platte (5) optisch transparent ist, sodass
die Signale optisch zwischen dem ersten Modul (2) und dem zweiten Modul (3) übertragen werden.

2. Bilderfassungsanordnung (1) nach Anspruch 1,
**dadurch gekennzeichnet, dass**
der zweite Sender (15) des zweiten Moduls (3) weiterhin ausgeführt ist zum Übertragen von Signalen an die Bilderfassungsvorrichtung (9).

3. Bilderfassungsanordnung (1) nach einem der Ansprüche 1 bis 2,
**dadurch gekennzeichnet, dass**
der zweite Empfänger (16) des zweiten Moduls (3) ausgeführt ist als ein Transceiver und weiterhin ausgeführt ist zum Übertragen von Signalen an die Bilderfassungsvorrichtung (9).

4. Bilderfassungsanordnung (1) nach einem der Ansprüche 1 bis 3,
**dadurch gekennzeichnet, dass**
die Leistung induktiv von dem zweiten Modul (3) auf das erste Modul (2) übertragen wird.

5. Bilderfassungsanordnung (1) nach einem der Ansprüche 1 bis 4,
**dadurch gekennzeichnet, dass**
die Bilderfassungsvorrichtung (9) eine Videokamera umfasst.

6. Bilderfassungsanordnung (1) nach einem der Ansprüche 1 bis 5,
**dadurch gekennzeichnet, dass**
die Bilderfassungsvorrichtung (9) ein Objektiv (10) umfasst, wobei das Objektiv ein Teleobjektiv, ein Weitwinkelobjektiv oder ein Fischaugenobjektiv ist.

7. Bilderfassungssystem (17; 35), umfassend zumindest eine Bilderfassungsanordnung (1) nach einem der Ansprüche 1 bis 6 und weiterhin umfassend eine Bildverarbeitungseinheit (18; 37) und eine Bildanzeige (19; 36).

8. Bilderfassungssystem (17; 35) nach Anspruch 7,
**dadurch gekennzeichnet, dass**
das zweite Modul (3) durch zumindest ein Kabel (20, 21) an die Bildverarbeitungseinheit (18; 37) und/oder Bildanzeige (19; 36) gekoppelt ist.

9. Objekt (30), umfassend das Bilderfassungssystem (17; 35) nach Anspruch 7 oder Anspruch 8,
**dadurch gekennzeichnet, dass**
das erste Modul (2) auf einer äußeren Oberfläche (4) einer Platte (5) des Objekts (30) montiert ist und das zweite Modul (3) auf einer inneren Oberfläche (7) der Platte (5) des Objekts (30) montiert ist und die Platte (5) optisch transparent ist.

10. Objekt (30) nach Anspruch 9,
**dadurch gekennzeichnet, dass**
das erste Modul (2) auf einer äußeren Oberfläche (4) des Objekts (30) montiert ist und das zweite Modul (3) auf einer inneren Oberfläche (7) des Objekts (30) montiert ist.

11. Fahrzeug (30), umfassend das Bilderfassungssystem (17; 35) nach Anspruch 7 oder Anspruch 8 und weiterhin umfassend zumindest eine weitere Bilderfassungsvorrichtung (31, 32, 34), wobei die Bilderfassungsanordnung (1) und die zumindest eine weitere Bilderfassungsvorrichtung (31, 32, 34) ausgeführt sind zum Bereitstellen einer Rundumsicht der unmittelbaren Umgebung.

12. Verwendung der Bilderfassungsanordnung (1) nach einem der Ansprüche 1 bis 6 in einem Rundumsichtsystem an einem Fahrzeug oder in einem Überwachungssystem für ein Gebäude, Objekt oder Grundstück.

## Revendications

1. Assemblage de capture d'image (1), comprenant :
un premier module (2) et un deuxième module (3),
le premier module (2) comprenant un dispositif de capture d'image (9), un premier émetteur (13) pour l'émission de signaux du dispositif de capture d'image (9) et un premier récepteur (11) pour recevoir de l'électricité sans fil du deuxième module (3), et
le deuxième module (3) comprenant un deuxième émetteur (15) pour transmettre de l'électricité sans fil au premier récepteur (11) du premier module (2) et un deuxième récepteur (16) pour recevoir des signaux du dispositif de capture d'image (9),
**caractérisé en ce que**
le premier module (2) est configuré pour être monté sur un premier côté (4) d'un panneau (5) et le deuxième module (3) est configuré pour être monté sur un deuxième côté (7) du panneau (5), le deuxième côté (7) faisant face au premier côté (4),
le panneau (5) étant optiquement transparent, de telle sorte que
les signaux sont transmis optiquement entre le premier module (2) et le deuxième module (3).

2. Assemblage de capture d'image (1) selon la revendication 1,
**caractérisé en ce que**
le deuxième émetteur (15) du deuxième module (3) est, en outre, configuré pour transmettre des signaux au dispositif de capture d'image (9).

3. Assemblage de capture d'image (1) selon l'une des revendications 1 à 2,
**caractérisé en ce que**
le deuxième récepteur (16) du deuxième module (3) est configuré comme un émetteur et est, en outre, configuré pour transmettre des signaux au dispositif de capture d'image (9).

4. Assemblage de capture d'image (1) selon l'une des revendications 1 à 3,
**caractérisé en ce que**
l'électricité est transmise du deuxième module (3) au premier module (2) par induction.

5. Assemblage de capture d'image (1) selon l'une des revendications 1 à 4,
**caractérisé en ce que**
le dispositif de capture d'image (9) comprend une caméra vidéo.

6. Assemblage de capture d'image (1) selon l'une des revendications 1 à 5,
**caractérisé en ce que**
le dispositif de capture d'image (9) comprend un objectif (10), l'objectif étant un objectif à petit angle de champ, un objectif à grand angle de champ ou un objectif fisheye.

7. Système de capture d'image (17 ; 35), comprenant au moins un assemblage de capture d'image (1) selon l'une des revendications 1 à 6 et comprenant en outre une unité de traitement de l'image (18 ; 37) et un écran d'affichage (19 ; 36).

8. Système de capture d'image (17 ; 35) selon la revendication 7,
**caractérisé en ce que**
le deuxième module (3) est couplé à l'unité de traitement de l'image (18 ; 37) et/ou à l'écran d'affichage (19 ; 36) par au moins un câble (20, 21).

9. Objet (30) comprenant le système de capture d'image (17 ; 35) selon la revendication 7 ou 8,
**caractérisé en ce que**
le premier module (2) est monté sur une surface extérieure (4) d'un panneau (5) de l'objet (30) et le deuxième module (3) est monté sur une surface intérieure (7) du panneau (5) de l'objet (39) et le panneau (5) est optiquement transparent.

10. Objet (30) selon la revendication 9,
**caractérisé en ce que**
le premier module (2) est monté sur une surface extérieure (4) de l'objet (30) et le deuxième module (3) est monté sur une surface intérieure (7) de l'objet (30).

11. Véhicule (30) comprenant le système de capture d'image (17 ; 35) selon la revendication 7 ou 8, et comprenant, en outre, au moins un dispositif de capture d'image supplémentaire (31, 32, 34), l'assemblage de capture d'image (1) et l'au moins un dispositif de capture d'image supplémentaire (31, 32, 34) étant configuré pour fournir une vue panoramique des environs immédiats.

12. Utilisation de l'assemblage de capture d'image (1) selon l'une des revendications 1 à 6 dans un système de vue panoramique sur un véhicule ou dans un système de surveillance pour un bâtiment, une propriété ou un terrain.
